(19) Europäisches Patentamt
European Patent Office
Office européen des brevets

(11) **EP 3 271 408 B1**

(12) **EUROPEAN PATENT SPECIFICATION**

(45) Date of publication and mention
of the grant of the patent:
**04.12.2019 Bulletin 2019/49**

(51) Int Cl.:
***C08F 210/06*** *(2006.01)* ***C08J 5/18*** *(2006.01)*

(21) Application number: **16711189.7**

(22) Date of filing: **14.03.2016**

(86) International application number:
**PCT/EP2016/055445**

(87) International publication number:
**WO 2016/146578 (22.09.2016 Gazette 2016/38)**

(54) **PROPYLENE BASED TERPOLYMER**

PROPYLENBASIERTES TERPOLYMER

TERPOLYMÈRE À BASE DE PROPYLÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.03.2015 EP 15159865**

(43) Date of publication of application:
**24.01.2018 Bulletin 2018/04**

(73) Proprietor: **Basell Poliolefine Italia S.r.l.
20121 Milano (IT)**

(72) Inventors:
• **MARZOLLA, Roberta**
**44122 Ferrara (IT)**
• **MASSARI, Paola**
**44122 Ferrara (IT)**

• **MARTINI, Nicoletta**
**44122 Ferrara (IT)**
• **CIARAFONI, Marco**
**44122 Ferrara (IT)**
• **CAPUTO, Tiziana**
**44122 Ferrara (IT)**

(74) Representative: **Sacco, Marco**
**Basell Poliolefine Italia S.r.l.
Intellectual Property
P.le Donegani, 12
44122 Ferrara (IT)**

(56) References cited:
**EP-A1- 2 666 793    EP-A2- 1 243 612
WO-A1-98/58971    WO-A1-2009/019169**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present disclosure relates to a propylene, ethylene, 1-butene terpolymers having a good optical and mechanical properties and particular low sealing initiating temperature (SIT) on films.

BACKGROUND OF THE INVENTION

Films made of propylene copolymers or terpolymers are known in the art.

Propylene copolymers or terpolymers are used because, with respect to propylene homopolymers, are characterized by a better impact, lower rigidity and better transparency. In some cases however, it is difficult to find the acceptable balance between those properties, particularly when properties contrasting to each other are desired. When a certain softness is desired, for example, it is commonly obtained in the presence of high amount of xylene soluble fractions that make them unsuitable for food contact applications.

US Patent No. US 6,221,984 discloses random copolymers of propylene with ethylene and at least one $C_4$-$C_{10}$ alpha-olefin and a process for preparing such random copolymers, which can be used in films, fibers or moldings. In particular, the terpolymers obtained by the process disclosed in this specification are particularly suitable for food packaging films because of their low proportions of xylene-soluble polymer particles (Examples 1-3) but are not suited for applications requiring a certain degree of softness.

On the other hand, when the xylene soluble fraction is increased (comparative examples 1 and 2) and softness is increased, the sealing initiation temperature and the optical properties become unsatisfactory.

WO 03/037981 discloses pipes made from at least a polypropylene composition obtained by a process carried out in a reactor comprising two interconnected polymerization zones.

Said process provides polypropylene compositions with high stiffness and impact resistance particularly suitable for pipes. When the propylene composition is a propyleneethylene-butene-1 copolymer, the flexural modulus is higher than 700 MPa.

The propylene composition disclosed by WO 03/037981 cannot be used in the preparation of films when a certain degree of softness is required.

Furthermore, WO 98/58971 discloses a process for producing terpolymers of propylene, ethylene and other alpha-olefins comprising slurry and gas phase reactors connected together. The process comprises using a combination of two or more reactors connected in a cascade for producing a polymer product exhibiting a ratio of ethylene-to-butene less than 0.3. Such comonomer distribution gives a material having low soluble content in hexane and good optical properties.

The drawback related to the above mentioned terpolymer product is the too low melting temperature and the consequent narrow processability window. In fact, with respect to a given comonomer units content, the higher is the melting temperature of the copolymer, the wider is its processability window.

WO 2009/019169 relates to a propylene/ethylene/1-butene terpolymer prepared in a gas phase reactor comprising two interconnected polymerization zones. Said terpolymer has among other features the ration between ethylene amount (wt%) and 1-butene amount (wt%) ranging from 0.1 to 0.8 and a xylene soluble fraction at 25°C higher than 9 wt%.

The applicant found that by increasing the ethylene/1-butene ratio (wt%/wt%) it is possible to obtain a material having a low SIT, and better transparency. Thus making this material fit for films.

SUMMARY OF INVENTION

Thus an object of the present disclosure is propylene, ethylene, 1-butene terpolymer containing:

a) from 1.8 wt% to 5.9 wt% of ethylene derived units;
b) from 2.0 wt% to 4.5 wt% of 1 butene derived units;
wherein:

the ratio C2wt%/C4wt% ranges from 0.9 to 1.3; wherein C2wt% is the weight per cent of ethylene derived units and C4wt% is the weight per cent of 1-butene derived units;
the Melt flow rate ranges from 1.0 to 30.0 g/10 min,
the xylene soluble fraction at 25°C is comprised between 10 wt% and 30 wt%.

DETAILED DESCRIPTION OF THE INVENTION

Thus an object of the present disclosure is propylene, ethylene, 1-butene terpolymer containing:

a) from 1.8 wt% to 5.9 wt% preferably from 3.3 wt% to 4.6 wt%; more preferably from 3.5 wt% to 4.4 wt% of ethylene derived units;
b) from 2.0 wt% to 4.5 wt% preferably from 2.8 wt% to 4.2 wt%; more preferably from 3.2 wt% to 4.0 wt% of 1 butene derived units;
wherein:

the ratio C2wt%/C4wt% ranges from 0.9 to 1.3; preferably from 0.9 to 1.2; more preferably from 1.0 to 1.1; wherein C2wt% is the weight per cent of ethylene derived units and C4wt% is the weight per cent of 1-butene derived units;
the Melt flow rate ranges from 1.0 to 30.0 g/10 min; preferably from 3.0 to 25.0 g/10 min, more preferably from 4.0 to 15.0 g/10 min
the xylene soluble fraction at 25°C is comprised between 10.0 wt% and 30.0 wt%; preferably comprised between 12.0 wt% to 25.0 wt%; more preferably from 15.5 wt% to 21 wt%.

The term terpolymer in the present disclosure it is meant e polymer containing only propylene, ethylene and 1-butene derived units.

Preferably the terpolymer of the present invention has the haze measured on 50 $\mu$m cast film lower than 0.18 %, more preferably lower than 0.15 % even more preferably lower than 0.13 %.

Preferably the terpolymer of the present invention has a sealing initiation temperature (SIT), measured as above disclosed, lower than 110.0°C; more preferably lower than 108.0°C, even more preferably the SIT is lower than 107.5°C.

The terpolymer of the present invention can be obtained with a polymerization process carried out in a gas-phase reactor comprising two interconnected polymerization zones.

A polymerization process carried out in a gas-phase polymerization reactor comprising at least two interconnected polymerization zones is described in the European patent EP 782587.

The process is carried out in a first and in a second interconnected polymerization zone to which propylene, ethylene and 1-butene are fed in the presence of a catalyst system and from which the polymer produced is discharged. The growing polymer particles flow through the first of said polymerization zones (riser) under fast fluidization conditions, leave said first polymerization zone and enter the second of said polymerization zones (downcomer) through which they flow in a densified form under the action of gravity, leave said second polymerization zone and are reintroduced into said first polymerization zone, thus establishing a circulation of polymer between the two polymerization zones. Generally, the conditions of fast fluidization in the first polymerization zone is established by feeding the monomers gas mixture below the point of reintroduction of the growing polymer into said first polymerization zone. The velocity of the transport gas into the first polymerization zone is higher than the transport velocity under the operating conditions and is between 2 and 15 m/s. In the second polymerization zone, where the polymer flows in densified form under the action of gravity, high values of density of the solid are reached which approach the bulk density of the polymer; a positive gain in pressure can thus be obtained along the direction of flow, so that it becomes possible to reintroduce the polymer into the first reaction zone without the help of mechanical means. In this way, a "loop" circulation is set up, which is defined by the balance of pressures between the two polymerization zones and by the head loss introduced into the system. Optionally, one or more inert gases, such as nitrogen or an aliphatic hydrocarbon, are maintained in the polymerization zones, in such quantities that the sum of the partial pressures of the inert gases is preferably between 5 and 80% of the total pressure of the gases. The operating parameters such as, for example, the temperature are those that are usual in gas-phase olefin polymerization processes, for example between 50°C and 120°C. The process can be carried out under operating pressure of between 0,5 and 10 MPa, preferably between 1.5 and 6 MPa.

Preferably, the various catalyst components are fed to the first polymerization zone, at any point of said first polymerization zone. However, they can also be fed at any point of the second polymerization zone. Molecular weight regulators known in the art, particularly hydrogen, can be used to regulate the molecular weight of the growing polymer.

The Ziegler-Natta catalysts suitable for producing the propylene terpolymers of the instant disclosure comprise a solid catalyst component comprising at least one titanium compound having at least one titanium-halogen bond and at least an electron-donor compound (internal donor), both supported on magnesium chloride. The Ziegler-Natta catalysts systems further comprise an organo-aluminum compound as essential co-catalyst and optionally an external electron-donor compound.

Suitable catalysts systems are described in the European patents EP45977, EP361494, EP728769, EP 1272533 and in the international patent application WO00/63261.

Preferably, the solid catalyst component comprises Mg, Ti, halogen and an electron donor selected from mono- and diesters of aromatic dicarboxylic acids having the -COOH groups into ortho position, wherein at least one of the R hydrocarbyl radical of the -COOR groups contains from 1 to 20 carbon atoms. Particularly preferably the electron donor is selected from di-n-propyl, di-n-butyl, diisobutyl, di-n-heptyl, di-2-ethylhexyl, di-n-octyl, di-neopentil phthalates.

According to a preferred method, the solid catalyst component can be prepared by reacting a titanium compound of formula $Ti(OR)_{n-y}X_y$, where n is the valence of titanium and y is a number between 1 and n, preferably $TiCl_4$, with a magnesium chloride deriving from an adduct of formula $MgCl_2 \cdot pROH$, where p is a number between 0.1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130 °C). Then, the emulsion is quickly quenched, thereby causing the solidification of the adduct in form of spherical particles. Examples of spherical adducts prepared according to this procedure are described in US 4,399,054 and US 4,469,648. The so obtained adduct can be directly reacted with the Ti compound or it can be previously subjected to thermal controlled dealcoholation (80-130 °C) so as to obtain an adduct in which the number of moles of alcohol is lower than 3, preferably between 0.1 and 2.5. The reaction with the Ti compound can be carried out by suspending the adduct (dealcoholated or as such) in cold $TiCl_4$ (generally 0 °C); the mixture is heated up to 80-130 °C and kept at this temperature for 0.5-2 hours. The treatment with $TiCl_4$ can be carried out one or more times. The internal donor can be added during the treatment with $TiCl_4$ and the treatment with the electron donor compound can be repeated one or more times. The internal electron donor compound is used in molar ratio with respect to the $MgCl_2$ of from 0.01 to 1 preferably from 0.05 to 0.5. The preparation of catalyst components in spherical form is described for example in European patent application EP-A-395083 and in the International patent application WO98/44009. The solid catalyst components obtained according to the above method show a surface area (by B.E.T. method) generally between 20 and 500 $m^2/g$ and preferably between 50 and 400 $m^2/g$, and a total porosity (by B.E.T. method) higher than 0.2 $cm^3/g$ preferably between 0.2 and 0.6 $cm^3/g$. The porosity (Hg method) due to pores with radius up to 10.000Å ranges from 0.3 to 1.5 $cm^3/g$, preferably from 0.45 to 1 $cm^3/g$.

The organo-aluminum compound is preferably an alkyl-Al selected from the trialkyl aluminum compounds such as for example triethylaluminum, triisobutylaluminum, tri-n-butylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as $AlEt_2Cl$ and $Al_2Et_3Cl_3$.

Preferred external electron-donor compounds include silicon compounds, esters such as ethyl 4-ethoxybenzoate, heterocyclic compounds and particularly 2,2,6,6-tetramethyl piperidine and ketones. Another class of preferred external donor compounds is that of silicon compounds of formula $R_a^5R_b^6Si(OR^7)_c$, where a and b are integer from 0 to 2, c is an integer from 1 to 3 and the sum (a+b+c) is 4; $R^5$, $R^6$, and $R^7$, are alkyl, cycloalkyl or aryl radicals with 1-18 carbon atoms optionally containing heteroatoms. Particularly preferred are methylcyclohexyldimethoxysilane, diphenyldimethoxysilane, diisopropyldimethoxysilane, methyl-t-butyldimethoxysilane, dicyclopentyldimethoxysilane, 2-ethylpiperidinyl-2-t-butyldimethoxysilane and 1,1,1,trifluoropropyl-2-ethylpiperidinyl-dimethoxysilane and 1,1,1,trifluoropropyl-metil-dimethoxysilane. The external electron donor compound is used in such an amount to give a molar ratio between the organo-aluminum compound and said electron donor compound of from 0.1 to 500.

The catalytic system can be pre-contacted (pre-polymerized) with small amounts of olefins. The molecular weight of the propylene terpolymers can be regulated by using known regulators, such as hydrogen.

The terpolymer of the present discosure is particularly discosure for applications such cast films and oriented films, BOPP films, heat-sealable films and all the applications requiring heat sealability and softness. Such propylene terpolymers have a good balance between optical properties and sealing properties combined with good shrinkage properties and softness.

The propylene terpolymers of the disclosure might further comprise at least one nucleating agent. Preferably, the propylene terpolymers comprise up to 2500 ppm, more preferably from 500 to 2000 ppm, of at least one nucleating agent.

The propylene terpolymers comprising at least one nucleating agent are particularly suitable for producing blown films.

The at least one nucleating agent can be selected among inorganic additives such as talc, silica or kaolin, salts of monocarboxylic or polycarboxylic acids, e.g. sodium benzoate or aluminum tert-butylbenzoate, dibenzylidenesorbitol or its $C_1$-$C_8$-alkyl-substituted derivatives such as methyldibenzylidenesorbitol, ethyldibenzylidenesorbitol or dimethyldibenzylidenesorbitol or salts of diesters of phosphoric acid, e.g. 2,2'-methylenebis(4,6,-di-tert-butylphenyl)phosphate sodium or lithium salt. Particularly preferred nucleating agents are 3,4-dimethyldibenzylidenesorbitol; aluminum-hydroxybis[2,2'-methylene-bis(4,6-di-t-butylphenyl)phosphate]; sodium 2,2'-methylene-bis(4,6-ditertbutylphenyl)phosphate and bicyclo[2.2.1]heptane-2,3-dicarboxylic acid, disodium salt (1R,2R,3R,4S) and HPN-20E that contains Zinc compounds and 1,2-

ciclohexanedicarboxylic acid calcium salt. The at least one nucleating agent may be added to the propylene terpolymer by known methods, such as by melt blending the at least one nucleating agent and the propylene terpolymer under shear condition in a conventional extruder.

The propylene terpolymers obtained by the process of the present disclosure may then be added with additional additives commonly employed in the polyolefin field, such as antioxidants, light stabilizers, antiacids, colorants and fillers.

In order to achieve the MFR of the terpolymer it is also possible to visbreak a polymer having a lower MFR. In order to visbreak the polymer known visbreaking agent can be used such as peroxides. With the visbreaking it is possible to fine tune the MFR of the product.

The following not-limiting examples are given to better illustrate the present disclosure

EXAMPLES

The following characterization methods were used in testing the propylene terpolymers produced.

Determination of the comonomer content:

The comonomers content have been determined by infrared spectroscopy by collecting the IR spectrum of the sample vs. an air background with a Fourier Transform Infrared spectrometer (FTIR) the instrument data acquisition parameters are:

purge time: 30 seconds minimum
collect time: 3 minutes minimum
apodization: Happ-Genzel
resolution: 2 cm-1.

Sample Preparation:

Using a hydraulic press, a thick sheet is obtained by pressing about g 1 of sample between two aluminum foils. If homogeneity is in question, a minimum of two pressing operations are recommended. A small portion is cut from this sheet to mold a film. Recommended film thickness ranges between 0.02-:0.05 cm (8 - 20 mils).

Pressing temperature is $180 \pm 10°C$ (356°F) and about 10 kg/cm2 (142.2 PSI) pressure for about one minute. Release the pressure and remove from the press and cool the sample to room temperature.

The spectrum of a pressed film of the polymer is recorded in absorbance vs. wavenumbers (cm-1). The following measurements are used to calculate ethylene and 1-butene content:

Area (At) of the combination absorption bands between 4482 and 3950 cm -1 which is used for spectrometric normalization of film thickness.

Area (AC2) of the absorption band between 750-700 cm-1 after two proper consecutive spectroscopic subtractions of an isotactic non additivate polypropylene spectrum and then of a reference spectrum of an 1-butene-propylene random copolymer in the range 800-690 cm-1.

Height (DC4) of the absorption band at 769 cm-1 (maximum value), after two proper consecutive spectroscopic subtractions of an isotactic non additivate polypropylene spectrum and then of a reference spectrum of an ethylene-propylene random copolymer in the range 800-690 cm-1.

In order to calculate the ethylene and 1-butene content calibration straights lines for ethylene and 1-butene obtained by using samples of known amount of ethylene and 1-butene are needed:

Calibration of ethylene:

Calibration straight line is obtained by plotting AC2 /At versus ethylene molar percent (%C2m). The slope GC2 is calculated from a linear regression.

Calibration of 1-butene

A calibration straight line is obtained by plotting DC4 /At versus butene molar percent (%C4m). The slope GC4 is calculated from a linear regression.

Spectrum of the unknown sample is recorded and then (At), (AC2) and (DC4) of the unknown sample are calculated. The ethylene content (% molar fraction C2m) of the sample is calculated as follows:

$$\%C2m = \frac{1}{G_{c2}} \cdot \frac{A_{c2}}{A_t}$$

The 1-butene content (% molar fraction C4m) of the sample is calculated as follows:

$$\%C4m = \frac{1}{G_{c4}} \cdot \left(\frac{A_{c4}}{A_t} - I_{c4}\right)$$

The propylene content (molar fraction C3m) is calculated as follows:

$$C3m = 100 - \%C4m - \%C2m$$

The ethylene, 1-butene contents by weight are calculated as follows:

$$\%C2wt = 100 \cdot \frac{28 \cdot C2m}{(56 \cdot C4m + 42 \cdot C3m + 28 \cdot C2m)}$$

$$\%C4wt = 100 \cdot \frac{56 \cdot C4m}{(56 \cdot C4m + 42 \cdot C3m + 28 \cdot C2m)}$$

Solubility in xylene: 2.5 g of polymer are dissolved in 250 ml of xylene at 135° C under agitation. After 20 minutes the solution is allowed to cool to 25° C, still under agitation, and then allowed to settle for 30 minutes. The precipitate is filtered with filter paper, the solution evaporated in nitrogen flow, and the residue dried under vacuum at 80° C until constant weight is reached. Thus one calculates the percent by weight of polymer soluble and insoluble at room temperature (25° C)

Melt Flow Rate (MFR"L"): Determined according to ISO 1133 230°C, 2.16 kg.

Flexural modulus: Determined according to the ISO 178 method.

Melting temperature: Melting temperature and crystallization temperature: Determined by differential scanning calorimetry (DSC). weighting 6 ±1 mg, is heated to 220 ±1° C at a rate of 20 °C/min and kept at 220 ±1° C for 2 minutes in nitrogen stream and it is thereafter cooled at a rate of 20° C/min to 40 ±2° C, thereby kept at this temperature for 2 min to crystallise the sample. Then, the sample is again fused at a temperature rise rate of 20° C/min up to 220° C ±1. The melting scan is recorded, a thermogram is obtained, and, from this, melting temperatures and crystallization temperatures are read.

- Sealing Initiation Temperature (S.I.T.):

Determined as follows.

Preparation of the film specimens

Some films with a thickness of 50 μm are prepared by extruding each test composition in a single screw Collin extruder (length/diameter ratio of screw: 25) at a film drawing speed of 7 m/min. and a melt temperature of 210-250 °C. Each resulting film is superimposed on a 1000 μm thick film of a propylene homopolymer having an isotacticity index of 97 and a MFR L of 2 g/10 min. The superimposed films are bonded to each other in a Carver press at 200 °C under a 9000 kg load, which is maintained for 5 minutes.

The resulting laminates are stretched longitudinally and transversally, i.e. biaxially, by a factor 6 with a TM Long film stretcher at 150 °C, thus obtaining a 20 μm thick film (18 μm homopolymer + 2 μm test composition).

2 x 5 cm specimens are cut from the films.

Determination of the S.I.T.

For each test two of the above specimens are superimposed in alignment, the adjacent layers being layers of the particular test composition. The superimposed specimens are sealed along one of the 5 cm sides with a Brugger Feinmechanik Sealer, model HSG-ETK 745. Sealing time is 0.5 seconds at a pressure of 0.1 N/mm². The sealing temperature is increased for each seal, starting from about 10 °C less than the melting temperature of the test composition. The sealed samples are left to cool and then their unsealed ends are attached to an Instron machine where they are tested at a traction speed of 50 mm/min.

The S.I.T. is the minimum sealing temperature at which the seal does not break when a load of at least 2 Newtons is applied in the said test conditions.

- Haze (on 50 $\mu$m mm plaque):

Determined on 50 $\mu$m thick cast films of the test composition. The measurement was carried out on a 50x50 mm portion cut from the central zone of the film.

The instrument used for the test was a Gardner photometer with Haze-meter UX-10 equipped with a G.E. 1209 lamp and filter C. The instrument calibration was made by carrying out a measurement in the absence of the sample (0% Haze) and a measurement with intercepted light beam (100% Haze).

Example 1 and comparative examples 2-3:

Propylene terpolymers are prepared by polymerising propylene, ethylene and butene-1 in the presence of a highly stereospecific Ziegler-Natta catalyst.

Preparation of the solid catalyst component

Into a 2000 mL five-necked glass reactor, equipped with mechanical stirrer, jacket and a thermocouple, purged with nitrogen, 1000 mL of $TiCl_4$ were introduced and the reactor cooled at -5°C. While stirring, 60.0 g of microspheroidal $MgCl_2 \cdot 1.7C_2H_5OH$ having average particle size of 58$\mu$m (prepared in accordance with the method described in example 1 of EP728769) was added at -5°C. The temperature was raised at 40°C and an amount of diethyl 2,3-diisopropylsuccinate such as to have a Mg/succinate molar ratio of 13 was added. The temperature was raised to 100°C and kept at this value for 60 min. After that the stirring was stopped for 15 min and the solid settled down. The liquid was siphoned off. After siphoning, fresh $TiCl_4$ and an amount of 9,9-bis(methoxymethyl)fluorene such to have a Mg/diether molar ratio of 26 was added. Then the temperature was raised to 110°C and kept for 30 minutes under stirring. The reactor was then cooled at 75°C and the stirrer was stopped for 15 min. After sedimentation and siphoning, fresh $TiCl_4$ was added. Then the temperature was raised to 90°C and the suspension was stirred for 15min. The temperature was then decreased to 75°C and the stirrer was stopped, for 15 min. After sedimentation and siphoning at the solid was washed six times with anhydrous hexane (6 x 1000 ml) at 60 °C and one time with hexane at 25°C. The solid was dried in a rotavapor.

Preparation of the catalyst system

Before introducing it into the polymerization reactors, the solid catalyst component described above was contacted with aluminum-triethyl (TEAL) and dicyclopentyldimethoxysilane (DCPMS) at a temperature of 15°C.

The propylene terpolymers of the examples were prepared in a single gas-phase polymerization reactor comprising two interconnected polymerization zones, a riser and a downcomer, as described in the European Patent EP782587.

Into the polymerisation reactor the propylene terpolymers are produced by feeding in a continuous and constant flow the prepolymerized catalyst system, hydrogen (used as molecular weight regulator), propylene, ethylene and butene-1 in the gas state (the feeding quantities expressed in mol/mol are shown in table 1). The polymer particles exiting from the polymerization step were subjected to a steam treatment to remove the unreacted monomers and dried.

Table 1 shows the process parameters of the polymerization of the propylene terpolymers of the examples 1-2.

Table 2 shows the properties measured on the propylene terpolymers produced in the examples 1-2 and comparative example 3.

Table 1

| Ex | comp 2 | ex 1 | comp 3 |
|---|---|---|---|
| Temperature, °C | 70 | 70 | 70 |

(continued)

| Ex | comp 2 | ex 1 | comp 3 |
|---|---|---|---|
| TEA/CAT, g/g | 6 | 6 | 6 |
| TEAL/Ext. Donor, g/g | 4 | 4 | 4 |
| PREPOLYMERIZATION | | | |
| Temperature, °C | 701 | 70 | 70 |
| POLYMERIZATION | | | |
| Temperature, °C | 70 | 70 | 70 |
| Pressure, barg | 23 | 23 | 23 |
| residence time min | 90 | 90 | 90 |
| H2/C3, mole/mol | 0.012 | 0.014 | 0.012 |
| C2/C2+C3 mol/mol | 0.04 | 0.025 | 0.022 |
| C4/C4+C3, mol/mol | 0.032 | 0.070 | 0.092 |
| MFR, g/10 min | 0.98 | 0.62 | 0.79 |
| C3 propylene, C2 ethylene C4 1-butene | | | |

The polymer particles of examples 1-3 are introduced in an extruder, wherein they are mixed with 500 ppm of Irganox 1010 and 1000 ppm of Irgafos 168, 500 ppm of Ca stearate and 270 ppm of PEROXAN HX. The polymer particles are extruded under nitrogen atmosphere in a twin screw extruder, at a rotation speed of 250 rpm and a melt temperature of 200-250° C.

Table 2

| Example | comp 2 4-837 | ex1 4-838 | comp 3 4-839 |
|---|---|---|---|
| Ethylene content, wt% | 4.8 | 3.7 | 3.1 |
| Butene content, wt% | 1.2 | 3.7 | 5.0 |
| Ethylene to Butene-1 ratio | 4.0 | 1.0 | 0.6 |
| XS, wt% | 16.8 | 14.9 | 16.7 |
| MFR, g/10 min | 5.5 | 5.9 | 6.0 |
| Melting Temperature, °C | 133.1 | 130.2 | 130.3 |
| SIT, °C | 110.0 | 107.0 | 107.0 |
| Haze on 50$\mu$m film, % | 0.19 | 0.10 | 0.20 |
| Flexural modulus, MPa | 500 | 520 | 550 |

The terpolymer of the present invention shows an improved SIT together with improved haze and comparable flexural modulus with respect to the comparative examples but having a lower amount of xylene extractables.

**Claims**

1.   A propylene, ethylene, 1-butene terpolymer containing:

     a) from 1.8 wt% to 5.9 wt% of ethylene derived units;
     b) from 2.0 wt% to 4.5 wt% of 1 butene derived units;
     wherein:

i) the ratio C2wt%/C4wt% ranges from 0.9 to 1.3; wherein C2wt% is the weight per cent of ethylene derived units and C4wt% is the weight per cent of 1-butene derived units;
ii) the Melt flow rate (ISO1133 230°C, 2.16 kg) ranges from 1.0 to 30.0 g/10 min,
iii) the xylene soluble fraction at 25°C is comprised between 10 wt% and 30 wt%.

2. The propylene, ethylene, 1-butene terpolymer according to claim 1 wherein the ratio C2wt%/C4wt% ranges from 0.9 to 1.2.

3. The propylene, ethylene, 1-butene terpolymer according to claims 1 or 2 containing from 3.3 wt% to 4.6 wt% of ethylene derived units and from 2.8 wt% to 4.2 wt% of 1 butene derived units.

4. The propylene, ethylene, 1-butene terpolymer according to any one of claims 1-4 containing from 3.5 wt% to 4.4 wt% of ethylene derived units and from 3.2 wt% to 4.03 wt% of 1 butene derived units.

5. The propylene, ethylene, 1-butene terpolymer according to any one of claims 1-4 wherein the haze measured on 50 $\mu$m cast film lower than 0.18 %.

6. The propylene, ethylene, 1-butene terpolymer according to any one of claims 1-5 wherein the sealing initiation temperature (SIT) is lower than 110.0°C.

7. A film comprising the propylene, ethylene, 1-butene terpolymer of claims 1-6

8. The film according to claim 7 further comprising a nucleating agent.

**Patentansprüche**

1. Terpolymer aus Propylen, Ethylen, 1-Buten, welches folgendes enthält:

a) 1,8 Gew.% bis 5,9 Gew.% von Ethylen abgeleitete Einheiten;
b) 2,0 Gew.% bis 4,5 Gew.% von 1-Buten abgeleitete Einheiten;
wobei:

i) das Verhältnis von C2-Gew.%/C4-Gew.% im Bereich von 0,9 bis 1,3 liegt; wobei C2-Gew.% der Gewichtsprozentsatz der von Ethylen abgeleiteten Einheiten ist und C4-Gew.% der Gewichtsprozentsatz der von 1-Buten abgeleiteten Einheiten ist;
ii) die Schmelzflussrate (ISO 1133, 230 °C, 2,16 kg) im Bereich von 1,0 bis 30,0 g/10 min liegt.
iii) die in Xylol bei 25 °C lösliche Fraktion zwischen 10 Gew.% und 30 Gew.% ausmacht.

2. Terpolymer aus Propylen, Ethylen, 1-Buten nach Anspruch 1, wobei das Verhältnis von C2-Gew.%/C4-Gew.% im Bereich von 0,9 bis 1,2 liegt.

3. Terpolymer aus Propylen, Ethylen, 1-Buten nach den Ansprüchen 1 oder 2, das 3,3 Gew.% bis 4,6 Gew.% von Ethylen abgeleitete Einheiten und 2,8 Gew.% bis 4,2 Gew.% von 1-Buten abgeleitete Einheiten enthält.

4. Terpolymer aus Propylen, Ethylen, 1-Buten nach einem der Ansprüche 1 bis 4, das 3,5 Gew.% bis 4,4 Gew.% von Ethylen abgeleitete Einheiten und 3,2 Gew.% bis 4,03 Gew.% von 1-Buten abgeleitete Einheiten enthält.

5. Terpolymer aus Propylen, Ethylen, 1-Buten nach einem der Ansprüche 1 bis 4, wobei die mit einer 50 $\mu$m Gießfolie gemessene Trübung geringer als 0,18 % ist.

6. Terpolymer aus Propylen, Ethylen, 1-Buten nach einem der Ansprüche 1 bis 5, wobei die Siegelinitiierungstemperatur (SIT) unter 110,0 °C liegt.

7. Folie, die das Terpolymer aus Propylen, Ethylen, 1-Buten gemäß einem der Ansprüche 1 bis 6 umfasst.

8. Folie nach Anspruch 7, des Weiteren umfassend ein Nukleierungsmittel.

**Revendications**

1. Terpolymère de propylène, d'éthylène et de 1-butène contenant :

    a) 1,8 % en poids à 5,9 % en poids de motifs dérivés de l'éthylène ;
    b) 2,0 % en poids à 4,5 % en poids de motifs dérivés du 1-butène ;
    où :

    i) le rapport % en poids de C2/% en poids de C4 est situé dans une plage de 0,9 à 1,3 ; % en poids de C2 étant le pourcentage en poids de motifs dérivés de l'éthylène et % en poids de C4 étant le pourcentage en poids de motifs dérivés du 1-butène ;
    ii) l'indice de fluidité à chaud (ISO1133 à 230°C, 2,16 kg) est situé dans une plage de 1,0 à 30,0 g/10 min,
    iii) la fraction soluble dans le xylène à 25°C est comprise entre 10% en poids et 30% en poids.

2. Terpolymère de propylène, d'éthylène et de 1-butène selon la revendication 1, le rapport % en poids de C2/% en poids de C4 étant situé dans une plage de 0,9 à 1,2.

3. Terpolymère de propylène, d'éthylène et de 1-butène selon les revendications 1 ou 2, contenant 3,3% en poids à 4,6% en poids de motifs dérivés de l'éthylène et 2,8% en poids à 4,2% en poids de motifs dérivés du 1-butène.

4. Terpolymère de propylène, d'éthylène et de 1-butène selon l'une quelconque des revendications 1 à 4, contenant 3,5% en poids à 4,4% en poids de motifs dérivés de l'éthylène et 3,2% en poids à 4,03% en poids de motifs dérivés du 1-butène.

5. Terpolymère de propylène, d'éthylène et de 1-butène selon l'une quelconque des revendications 1 à 4, le voile mesuré sur un film coulé de 50 $\mu$m étant inférieur à 0,18%.

6. Terpolymère de propylène, d'éthylène et de 1-butène selon l'une quelconque des revendications 1 à 5, la température d'initiation de scellage (TIS) étant inférieure à 110,0°C.

7. Film comprenant le terpolymère de propylène, d'éthylène et de 1-butène selon les revendications 1 à 6

8. Film selon la revendication 7, comprenant en outre un agent de nucléation.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6221984 B
- WO 03037981 A
- WO 9858971 A
- WO 2009019169 A
- EP 782587 A
- EP 45977 A
- EP 361494 A
- EP 728769 A
- EP 1272533 A
- WO 0063261 A
- US 4399054 A
- US 4469648 A
- EP 395083 A
- WO 9844009 A